# EUROPEAN PATENT SPECIFICATION

(11) **EP 2 192 283 B1**
(45) Date of publication and mention of the grant of the patent: **02.11.2011**
(21) Application number: 08169996.9
(22) Date of filing: 26.11.2008
(51) Int. Cl.: F01N 3/20

(54) **Mounting Arrangement for an Exhaust System**
Montageanordnung für ein Abgassystem
Agencement de montage pour système d'échappement

(43) Date of publication of application: 02.06.2010
(73) Proprietor: Delphi Technologies Holding S.à.r.l., 4940 Bascharage (LU)
(72) Inventor: Wright, Keith, Chatham, Kent ME5 7RS (GB); Cooke, Michael, Gillingham, Kent ME7 1DR (GB)
(74) Representative: Gregory, John David Charles

(56) References cited:
- EP-A- 1 878 920
- DE-A1- 10 035 678
- DE-A1-102005 061 145
- DE-A1-102006 061 733

## Description

### TECHNICAL FIELD

This invention relates to a mounting arrangement for an exhaust system for an internal combustion engine. In particular, but not exclusively, the invention relates to a means for mounting a pump for dispensing reagent into an exhaust gas stream to an exhaust pipe.

### BACKGROUND TO THE INVENTION

In the Applicant's European Patent Application Publication No. EP 1 878 920 A1, a solenoid-operated reagent dosing pump is described. Such a pump is typically used to supply a reagent, such as a reducing agent, to a nozzle for dispersion into an exhaust gas stream within an exhaust pipe of a vehicle. This arrangement can be useful as part of a selective catalytic reduction system (SCR) for reducing harmful exhaust gas emissions from vehicle engines.

In some cases, it is desirable to mount a pump directly on the exhaust pipe, so that an output nozzle of the pump extends through a port in the exhaust pipe for delivery of the reagent to the exhaust gas stream. The pump must be attached securely to the exhaust pipe, and in such a way that there is no leakage of exhaust gases through the port.

DE 10 2006 061 733 A1 discloses a mounting arrangement for mounting a reducing agent metering valve on an exhaust pipe. The mounting arrangement includes a retainer device that is arranged to damp vibrations of the metering valve.

It is against this background that the present invention has been devised.

### SUMMARY OF THE INVENTION

According to a first aspect of the present invention, there is provided a mounting arrangement for attaching a pump to an exhaust pipe, the mounting arrangement comprising a boss attached or attachable to the exhaust pipe, and retaining means for retaining the pump in the boss, in use. The retaining means comprises at least one compressible member for damping vibration of the pump.

The mounting arrangement further comprises a mounting nut for retaining the or each compressible member, and a sleeve member attached or attachable to the pump so as to cause compression of the or each compressible member against the mounting nut whilst maintaining a clearance between the sleeve member and the mounting nut.

Preferably, the retaining means also comprise means for reducing heat transfer from the exhaust pipe to the pump.

In one embodiment, the retaining means comprise one or more compressible, non-rigid members, such as O rings, which hold the pump in place in such a way that no part of the pump is in direct mechanical (i.e. rigid) contact with the exhaust pipe. The O rings seal the pump in the boss so that exhaust gases cannot escape.

Because the retaining means, which forms the interface between the pump and the exhaust pipe is non-rigid, vibrations from the reciprocating solenoid within the pump are transmitted to the exhaust pipe to a lesser degree than would otherwise be the case. Instead, the vibrations are damped by the retaining means, so that the pump is acoustically decoupled from the exhaust pipe. Consequently, the operating noise of the pump is not appreciably amplified by the exhaust pipe when the pump is in use.

Preferably, the retaining means also serves to reduce heat transfer by conduction from the exhaust pipe to the pump, for example when the retaining means is of a polymeric material such as rubber. Thus, in this case, the pump is also thermally decoupled from the exhaust pipe. This helps to reduce the amount of cooling of the pump and reagent required for efficient and reliable operation of the pump.

### BRIEF DESCRIPTION OF THE DRAWINGS

Preferred embodiments of the present invention will now be described, by way of example only, with reference to the accompanying drawings in which like reference numerals are used for like parts, and in which:
Figure 1 is a part-sectional side view showing a reagent pump and part of an exhaust pipe illustrating a mounting arrangement useful for understanding the present invention;
Figure 2 is a part-sectional side view showing a part of a reagent pump and part of an exhaust pipe illustrating a mounting arrangement according to a first embodiment of the present invention;
Figure 3 is a part-sectional side view showing a part of a reagent pump and part of an exhaust pipe illustrating a mounting arrangement according to a second embodiment of the present invention;
Figure 4 is a part-sectional side view showing a part of a reagent pump and part of an exhaust pipe illustrating a mounting arrangement according to a third embodiment of the present invention; and
Figure 5 is a part-sectional side view showing a part of a reagent pump and part of an exhaust pipe illustrating a mounting arrangement according to a fourth embodiment of the present invention.

### DETAILED DESCRIPTION OF PREFERRED EMBODIMENTS

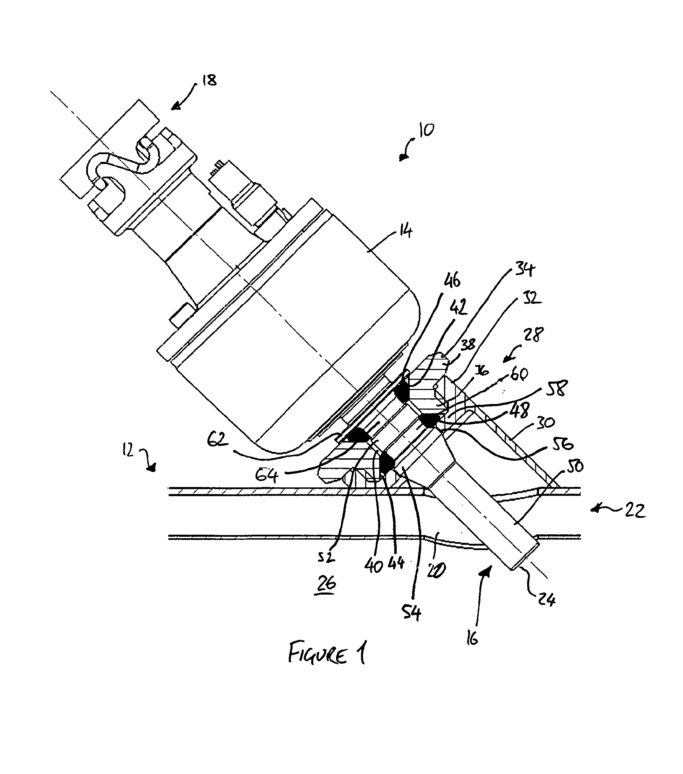

A mounting arrangement useful for understanding the present invention will be described with reference to Figure 1, which shows a pump 10 mounted on an exhaust pipe 12.

The pump comprises a pump body 14 and an elongate nozzle 16. A solenoid actuator (not shown) is housed within the pump body 14 and is arranged to pump fluid from an inlet 18 of the pump to the nozzle 16, for example as described in European Patent Application Publication No. EP 1 878 920 A1.

When the pump 10 is mounted on the exhaust pipe, the nozzle 16 extends through a port 20 in the wall 22 of the exhaust pipe 12. In this way, fluid dispensed from an outlet 24 of the nozzle 16 in use of the pump 10 enters the exhaust gas stream carried within a bore 26 of the exhaust pipe 12.

The pump 10 is held in position, with its outlet 24 in the bore 26, by a mounting arrangement 28. The mounting arrangement 28 comprises a mounting boss 30 which is welded to the wall 22 of the exhaust pipe 12. An end portion 32 of the mounting boss 30 is of generally cylindrical form. In this arrangement, a cylinder axis of the mounting boss 30 is at approximately 45 degrees to the longitudinal axis of the exhaust pipe 12.

The end portion 32 carries an internal thread to receive a mounting nut 34 having an externally-threaded portion 36 of relatively small diameter and a faceted portion 38 of relatively large diameter, the faceted portion 38 being arranged to cooperate with a tool such as a spanner for screwing the mounting nut 34 into the mounting boss 30. The mounting nut 34 includes a central opening 40 which is unthreaded in this arrangement. The central opening 40 is formed with chamfered regions 42, 44 at the upper and lower ends of the nut 34 so that the chamfered regions 42, 44 form oppositely-directed surfaces of the nut 34.

The mounting arrangement 28 further comprises a first O ring 46 which is, in part, received in the chamfered region 42 of the mounting nut 34 closest to the pump body 14, and a second O ring 48 which is, in part, received in the chamfered region 44 of the mounting nut 34 furthest from the pump body 14.

The nozzle 16 of the pump 10 comprises a heat shield or nozzle body 50 which is connected to the pump body 14 at an end opposite to the outlet 24.

The nozzle body 50 is shaped to cooperate with the first and second O rings 46, 48 so as to provide a retaining clamping force which holds the nozzle body 50, and hence the pump 10, in the mounting arrangement 28.

In particular, the nozzle body 50 comprises a first projection or collar 52 which is located within the central opening 40 of the mounting nut 34, and between the first and second O rings 46, 48, when the pump 10 is mounted in the mounting arrangement 28. The outside diameter of the first collar 52 is smaller than the inside diameter of the opening 40, so that the first collar 52 is a clearance fit within the opening 40.

The nozzle body 50 further comprises a second projection or collar 54 which is located, in use, within an opening 56 in the mounting boss 30 defined by an internal annular flange 58. The outside diameter of the second collar 54 is smaller than the inside diameter of the opening 56, so that the second collar 54 is a clearance fit within the opening 56. The first collar 52 and second collar 54 together define a groove 60 therebetween for receiving and locating the second O ring 48 of the mounting arrangement 28 on its internal diameter.

The nozzle body 50 further comprises an annular projection or flange 62 close to but spaced from the connection between the nozzle 16 and the pump body 14. The first collar 52 and the flange 62 together define a groove 64 therebetween for receiving and locating the first O ring 46 of the mounting arrangement 28 on its internal diameter.

To mount the pump 10, the first O ring 46 is placed around the nozzle body 50 and located in the groove 64 adjacent to the flange 62. The mounting nut 34 is then placed over the nozzle body 50, so that the first O ring 46 is received within the chamfered region 42. The second O ring 48 is then placed around the nozzle body 50 and located in the groove 60 between the first collar 52 and the second collar 54. It is also conceivable that the O rings 46, 48 could be supplied attached to the mounting nut 34, for example by adhesive, in which case the mounting nut 34 and O rings 46, 48 would be placed over the nozzle body 50 together.

The pump 10, together with the O rings 46, 48 and mounting nut 34 assembled onto the nozzle body 50, is then positioned such that the nozzle 16 extends through the port 20 in the exhaust pipe 12.

The mounting nut 34 is then screwed into the mounting boss 30 by engaging the internal thread of the end portion 32 of the boss 30 with the threaded portion 36 of the nut 34. In doing so, the chamfered region 44 of the mounting nut 34 compresses the second O ring 48 into the groove 60 and against both the flange 58 of the mounting boss 30 and the second collar 54 of the nozzle body 50, thereby causing the nozzle body 50 to be drawn through the port 20 so that the pump 10 moves towards the exhaust pipe 12.

Displacement of the pump 10 towards the exhaust pipe 12 in this way additionally causes the flange 62 of the nozzle body 50 to compress the first O ring 46 into the groove 64 between the flange 62 and the first collar 52 and against the chamfered region 42 of the mounting nut 34.

Consequently, when the mounting nut 34 is tightened, both O rings 46, 48 are compressed against the nozzle body 50 so as to hold the nozzle 16, and hence the pump 10, securely in the mounting arrangement 28.

By virtue of the clearance between the first collar 52 and the opening 40 in the mounting nut 34 and between the second collar 54 and the opening 56 in the internal flange 58 of the mounting boss 30, there is no rigid or stiff mechanical connection between the pump 10 and the mounting boss 30 or the exhaust pipe 12. Instead, the pump 10 is connected to the exhaust pipe 12 solely by way of the O rings 46, 48.

In this way, vibrations originating from the pump 10 in operation are damped by the polymeric material from which the O rings 46, 48 are made. Furthermore, because the O rings 46, 48 are poor thermal conductors, the conduction of heat from the exhaust pipe 12 to the pump 10 is inhibited. Thus the pump 10 can be considered to be acoustically and thermally decoupled from the exhaust pipe 12.

The O rings could be made from any suitable material capable of damping the vibrations of the pump 10 whilst withstanding the temperatures at which the exhaust system operates. For example, a perfluoroelastomer (FFKM) material, such as Kalrez Spectrum 7075 (Kalrez is a registered trade mark of Dupont Performance Elastomers) has been found to be suitable.

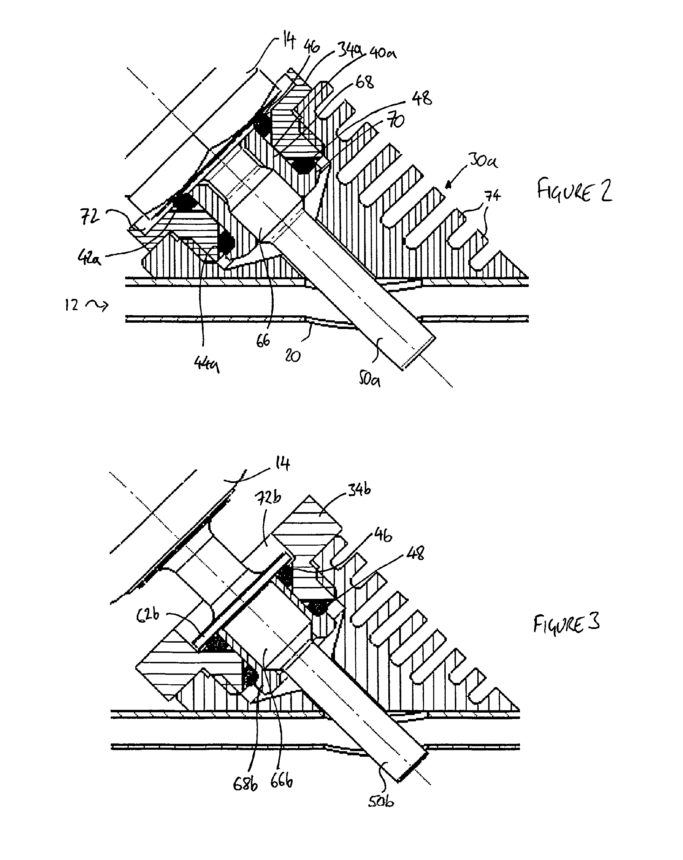

A first embodiment of the invention will now be described with reference to Figure 2. In this embodiment, the nozzle body 50a comprises a threaded collar 66 for receiving an internally-threaded sleeve member 68 of generally cylindrical form. A flange 70 extends outwardly from the end of the sleeve member 68 furthest from the pump body 14.

As in the mounting arrangement of Figure 1, a central opening 40a of the nut is formed with chamfered regions 42a, 44a at the upper and lower ends of the mounting nut 34a so that the chamfered regions 42a, 44a form oppositely-directed surfaces of the nut 34. The sleeve member 68 is a clearance fit in the opening 40a.

The first O ring 46 is therefore received within a space defined by the sleeve member 68, the chamfered region 42a of the mounting nut 34a closest to the pump body 14, and the pump body 14 itself, which in this embodiment takes the place of the nozzle body flange of the mounting arrangement of Figure 1. The mounting nut 34a includes a recess 72 for receiving the end of the pump body 14.

The second O ring 48 is received within a space defined by the chamfered region 44a of the mounting nut 34a furthest from the pump body 14, the sleeve member 68, and the flange 70 of the sleeve member 68.

To mount the pump to the exhaust pipe 12, the first O ring 46 is placed over the nozzle body 50a, followed by the mounting nut 34a and the second O ring 48. The sleeve member 68 is then screwed onto the collar 66 of the nozzle body 50a, so as to compress the first and second O rings 46, 48 against the mounting nut 34a. The mounting nut 34a is then held securely on to the nozzle body 50a by way of the O rings 46, 48 and the sleeve member 68.

The mounting nut 34a is then screwed into the mounting boss 30a, which in this embodiment is formed with heat-dissipating fins 74 to aid cooling of the mounting boss 30a. A clearance exists between the nozzle body 50a and the mounting boss 30a where the nozzle body 50a extends through the mounting boss 30a.

As in the mounting arrangement of Figure 1, in this first embodiment of the invention there is no rigid or stiff mechanical connection between the pump and the mounting boss 30a or the exhaust pipe 12, so that the pump is acoustically and thermally decoupled from the exhaust pipe 12. In particular, the sleeve member 68 is retained by the mounting nut 34a by virtue of the O rings 46, 48, but the clearance between the sleeve member 68, the mounting nut 34a, and the pump body 14 prevents any rigid mechanical connection between the pump and the exhaust pipe 12.

Figure 3 shows a second embodiment of the invention, which is similar to the first embodiment of the invention, except in that the nozzle body 50b comprises an enlarged threaded collar 66b over which the sleeve member 68b is screwed, and in that an annular projection or flange 62b of the nozzle body 50b is received within a recess 72b at the pump body end of the mounting nut 34b, in use. When assembled, the first O ring 46 is compressed against the flange 62b of the nozzle body.

Clearances between the mounting nut 34b, the flange 62b, and the sleeve member 68b ensure that the connection between the pump and the exhaust pipe is acoustically and thermally decoupled by virtue of the O rings 46, 48.

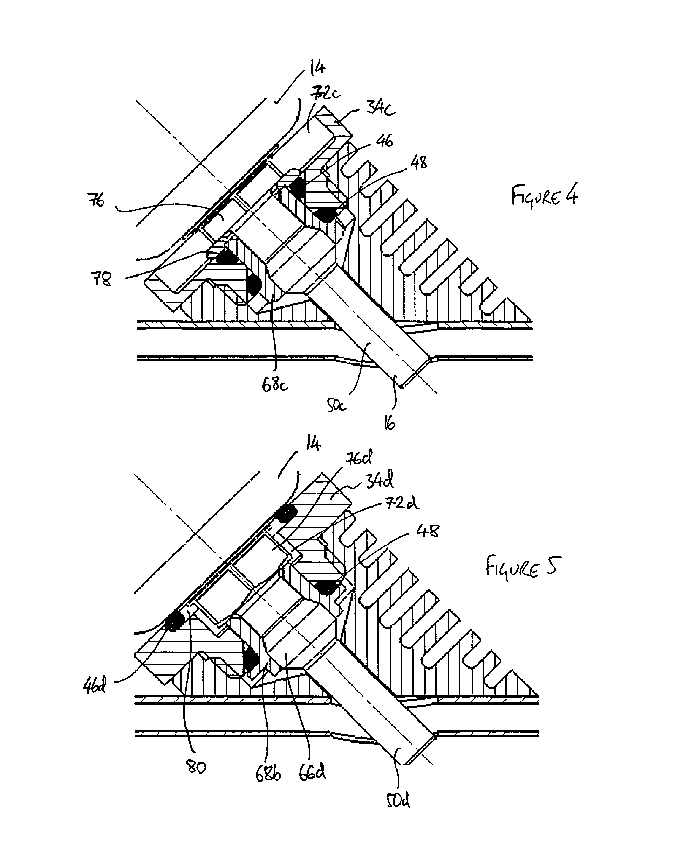

Figure 4 shows a third embodiment of the invention, which is again similar to the first embodiment of the invention, except in that the mounting nut 34c comprises a recess 72c for receiving a hex nut portion 76 of the nozzle body 50c, and an annular washer 78 which is located around the nozzle body 50c adjacent to the hex nut portion 76. In this embodiment of the invention, the first O ring 46 is compressed against the washer 78.

Clearances between the mounting nut 34c, the washer 78, and the sleeve member 68c ensure that the connection between the pump and the exhaust pipe is acoustically and thermally decoupled by virtue of the O rings 46, 48.

Figure 5 shows a fourth embodiment of the invention, which is again similar to the first embodiment of the invention, except in that the mounting nut 34d is provided with a recess at the pump body end having a relatively deep, relatively small-diameter portion 72d, and a relatively shallow, relatively large-diameter peripheral portion 80. The deep portion 72d of the recess receives a hex nut portion 76d of the nozzle body 50d, while the peripheral portion 80 of the recess receives a relatively large-diameter O ring 46d.

In this embodiment, the large-diameter O ring 46d is compressed between the pump body 14 and the mounting nut 34d when the sleeve member 68d is screwed on to the threaded collar 66d of the nozzle body 50d. Clearances between the mounting nut 34d and the pump body 14, the hex nut portion 76d, and the sleeve member 68b ensure that the connection between the pump and the exhaust pipe is acoustically and thermally decoupled by virtue of the O rings 46d, 48.

It will be appreciated that many variations of the above-described embodiments are within the scope of the present invention.

For example, the O rings described above could be replaced by an alternative retaining means, for example a single O ring, or a polymeric sleeve or gasket. Instead of a continuous circumferential ring or sleeve, the retaining member could comprise a number of angularly-spaced supports or the like could be provided to provide the damping action.

Where a sleeve member is provided, in accordance with the invention, the sleeve member may be attachable to the pump by engagement of screw threads as described above, or could conceivably be attached by alternative means such as a retaining clip or spring. As further examples, the sleeve member could be soldered, brazed or welded to the nozzle body or pump, or the sleeve member could be an interference fit or press fit on the nozzle body or pump.

The mounting angle (i.e. the angle between a longitudinal axis of the nozzle and the longitudinal axis of the exhaust pipe) is not limited to 45 degrees. Preferably, the mounting angle is a value selected from the range from about 30 degrees to about 90 degrees. However, it will be appreciated that substantially any mounting angle could be used.

## Claims

1. A mounting arrangement (28) for attaching a pump (10) to an exhaust pipe (12), the mounting arrangement comprising a boss (30) attached or attachable to the exhaust pipe (12), and retaining means (34, 46, 48) for retaining the pump in the boss (30), in use;
wherein the retaining means comprises at least one compressible member (46, 48) for damping vibration of the pump (10);
**characterised in that** the mounting arrangement further comprises:
a mounting nut (34) for retaining the or each compressible member (46, 48); and
a sleeve member (68) attached or attachable to the pump (10) so as to cause compression of the or each compressible member (46, 48) against the mounting nut (34) whilst maintaining a clearance between the sleeve member (68) and the mounting nut (34).

2. A mounting arrangement according to Claim 1, wherein the retaining means further comprise means (46, 48) for reducing heat transfer from the exhaust pipe (12) to the pump (10).

3. A mounting arrangement according to Claim 1 or Claim 2, wherein the or each compressible member comprises an O ring (46, 48).

4. A mounting arrangement according to any preceding Claim, comprising two or more compressible members (46, 48) arranged in a spaced-apart configuration.

5. A mounting arrangement according to Claim 4, wherein the mounting nut (34) comprises oppositely-directed surfaces (42, 44), each surface cooperating with one of the compressible members in use.

6. A pump arranged to cooperate with a mounting arrangement according to any preceding claim, wherein the pump comprises a nozzle (50b) having at least one projection (62b) against which the or one of the compressible members (46) of the mounting arrangement is compressed, in use.

## Patentansprüche

1. Befestigungsanordnung (28) zur Anbringung einer Pumpe (10) an einem Abgasrohr (12), wobei die Befestigungsanordnung eine an dem Abgasrohr (12) angebrachte oder anbringbare Aufnahme (30) und eine Halteeinrichtung (34, 46, 48) zum Festhalten der Pumpe in der Aufnahme (30) im Gebrauch aufweist,
wobei die Halteeinrichtung wenigstens ein zusammendrückbares Element (46, 48) zum Dämpfen von Schwingungen der Pumpe (10) aufweist,
**dadurch gekennzeichnet, dass** die Befestigungsanordnung ferner Folgendes aufweist:
eine Befestigungsmutter (34) zum Festhalten des oder jedes zusammendrückbaren Elements (46, 48) und
ein Hülsenelement (68), das an der Pumpe (10) angebracht oder anbringbar ist, um das Zusammenrücken des oder jedes zusammendrückbaren Elements (46, 48) gegen die Befestigungsmutter (34) zu verursachen, während es zwischen dem Hülsenelement (68) und der Befestigungsmutter (34) einen Freiraum aufrecht erhält.

2. Befestigungsanordnung nach Anspruch 1, wobei die Halteeinrichtung ferner eine Einrichtung (46, 48) zum Verringern des Wärmeübergangs vom Abgasrohr (12) zu der Pumpe (10) aufweist.

3. Befestigungsanordnung nach Anspruch 1 oder Anspruch 2, wobei das oder jedes zusammendrückbare Element einen 0-Ring (46, 48) umfasst.

4. Befestigungsanordnung nach einem der vorhergehenden Ansprüche, die zwei oder mehr zusammendrückbare Elemente (46, 48) aufweist, die in einer voneinander beabstandeten Konfiguration angeordnet sind.

5. Befestigungsanordnung nach Anspruch 4, wobei die Befestigungsmutter (34) einander entgegengesetzt gerichtete Oberflächen (42, 44) aufweist, wobei jede Oberfläche im Gebrauch mit einem der zusammendrückbaren Elemente zusammenwirkt.

6. Pumpe, die zum Zusammenwirken mit einer Befestigungsanordnung nach einem der vorhergehenden Ansprüche angeordnet ist, wobei die Pumpe eine Düse (50b) aufweist, die wenigstens einen Vorsprung (62b) hat, gegen den das oder eines der zusammendrückbare(n) Element(e) (46) der Befestigungsanordnung im Gebrauch zusammengedrückt wird.

## Revendications

1. Agencement de montage (28) pour attacher une pompe (10) sur un tube de refoulement (12), l'agencement de montage comprenant un bossage (30) attaché ou susceptible d'être attaché sur le tube de refoulement (12), et des moyens de retenue (34, 46, 48) pour retenir la pompe dans le bossage (30) en utilisation ;
dans lequel les moyens de retenue comprennent au moins un élément compressible (46, 48) pour amortir les vibrations de la pompe (10) ; **caractérisé en ce que** l'agencement de montage comprend en outre :
un écrou de montage (34) pour retenir l'élément compressible ou chaque élément compressible (46, 48) ; et
un élément en fourreau (68) attaché ou susceptible d'être attaché sur la pompe (10) de manière à provoquer une compression de l'élément compressible ou de chaque élément compressible (46, 48) contre l'écrou de montage (34) tout en maintenant un jeu entre l'élément en fourreau (68) et l'écrou de montage (34).

2. Agencement de montage selon la revendication 1, dans lequel les moyens de retenue comprennent en outre des moyens (46, 48) pour réduire un transfert de chaleur depuis le tube de refoulement (12) vers la pompe (10).

3. Agencement de montage selon la revendication 1 ou 2, dans lequel l'élément compressible ou chaque élément compressible comprend une bague torique (46, 48).

4. Agencement de montage selon l'une quelconque des revendications précédentes, comprenant deux ou plusieurs éléments compressibles (46, 48) agencés dans une configuration en écartement.

5. Agencement de montage selon la revendication 4, dans lequel l'écrou de montage (34) comprend des surfaces dirigées en opposition (42, 44) chaque surface coopérant avec l'un des éléments compressibles en utilisation.

6. Pompe agencée pour coopérer avec un agencement de montage selon l'une quelconque des revendications précédentes, dans laquelle la pompe comprend une buse (50b) ayant au moins une projection (62b) contre laquelle l'élément compressible ou l'un des éléments compressibles (46) de l'agencement de montage est comprimé en utilisation.
